(19) Europäisches Patentamt
European Patent Office
Office européen des brevets

(11) **EP 1 493 078 B1**

(12) **FASCICULE DE BREVET EUROPEEN**

(45) Date de publication et mention de la délivrance du brevet:
**18.03.2009 Bulletin 2009/12**

(21) Numéro de dépôt: **03740566.9**

(22) Date de dépôt: **03.04.2003**

(51) Int Cl.:
***G06F 7/72*** *(2006.01)*

(86) Numéro de dépôt international:
**PCT/FR2003/001058**

(87) Numéro de publication internationale:
**WO 2003/083645 (09.10.2003 Gazette 2003/41)**

(54) **PROCÉDÉ CRYPTOGRAPHIQUE PROTÉGÉ CONTRE LES ATTAQUES DE TYPE À CANAL CACHÉ**

GEGEN SEITENKANALANGRIFFE GESCHÜTZTES KRYPTOGRAPHISCHES VERFAHREN

CRYPTOGRAPHIC METHOD PROTECTED AGAINST SIDE CHANNEL ATTACKS

(84) Etats contractants désignés:
**AT BE BG CH CY CZ DE DK EE ES FI FR GB GR HU IE IT LI LU MC NL PT RO SE SI SK TR**

(30) Priorité: **03.04.2002 FR 0204117**

(43) Date de publication de la demande:
**05.01.2005 Bulletin 2005/01**

(73) Titulaire: **Gemalto SA**
**13705 La Ciotat (FR)**

(72) Inventeurs:
• **JOYE, Marc**
  **F-83640 Saint Zacharie (FR)**
• **CHEVALLIER-MAMES, Benoît**
  **F-13260 Cassise (FR)**

(56) Documents cités:
**EP-A- 1 158 384**          **WO-A-00/25204**
**WO-A-02/099624**

• **MOELLER ET AL: "SECURING ELLIPTIC CURVE POINT MULTIPLICATION AGAINST SIDE-CHANNEL ATTACKS" INFORMATION SECURITY. 4TH INTERNATIONAL CONFERENCE, ISC 2001 MALAGA, SPAIN, OCTOBER 1-3, 2001, PROCEEDINGS, 1 octobre 2001 (2001-10-01), pages 324-334, XP001068194 Springer Verlag, Berlin DE**
• **OSWALD E ET AL: "RANDOMIZED ADDITION-SUBTRACTION CHAINS AS A COUNTERMEASURE AGAINST POWER ATTACKS" CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS, LECTURE NOTES IN COMPUTER SCIENCE, BERLIN: SPRINGER, DE, vol. 2162, 14 mai 2001 (2001-05-14), pages 39-50, XP001061159 ISBN: 3-540-42521-7**
• **LIARDET P.-Y. ET AL: 'PREVENTING SPA/DPA IN ECC SYSTEMS USING THE JACOBI FORM' CRYPTOGRAPHIC HARDWARE AND EMBEDDED SYSTEMS. 3RD INTERNATIONAL WORKSHOP, CHES 2001, PARIS, FRANCE; PROCEEDINGS,LECTURE NOTES IN COMPUTER SCIENCE vol. 2162, 14 Mai 2001 - 16 Mai 2001, SPRINGER, BERLIN, ALLEMAGNE, pages 391 - 401 ISBN: 3-540-42521-7**

## Description

L'invention concerne un procédé cryptographique protégé contre les attaques de type à canal caché. L'invention est notamment intéressante pour protéger des algorithmes au cours duquel on exécute un bloc d'instructions parmi plusieurs blocs d'instructions différents en fonction d'une variable d'entrée. Un tel algorithme est par exemple, mais non limitativement, un algorithme binaire d'exponentiation, réalisant un calcul de type $B = A^D$, A, B et D étant des nombres entiers. Un tel algorithme est par exemple mis en oeuvre dans des dispositifs électroniques tels que des cartes à puce.

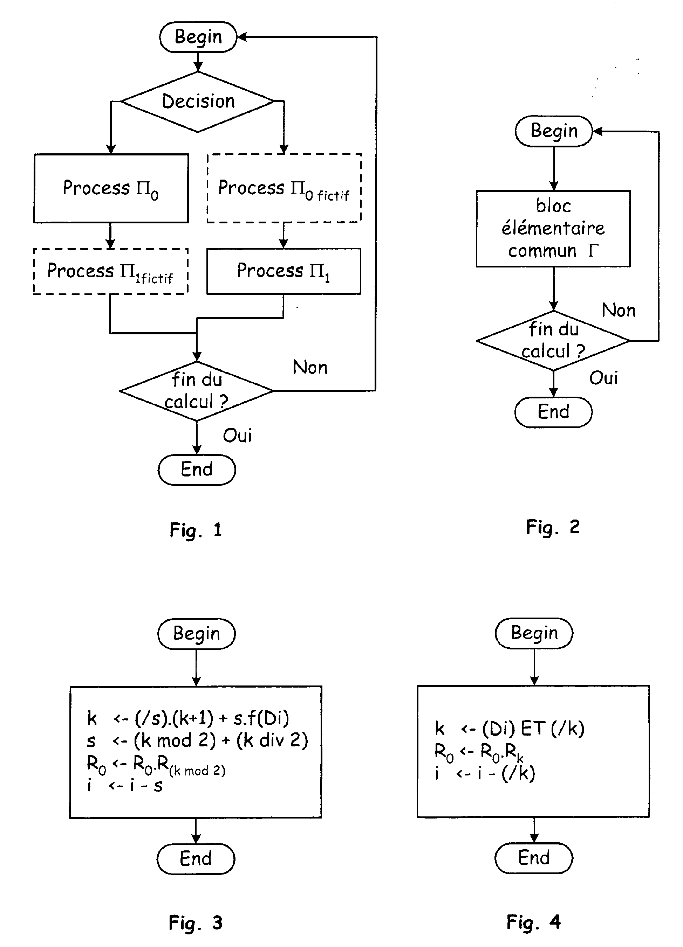

Le diagramme de principe d'un tel algorithme est représenté sur la figure 1. I1 comprend une première étape de test de la valeur d'une donnée d'entrée. En fonction du résultat du test, on réalise ensuite un bloc d'instructions $\Pi_0$ ou un bloc d'instructions $\Pi_1$. L'algorithme peut ensuite se terminer, ou bien une nouvelle étape de test est réalisée sur une autre variable d'entrée. Dans l'exemple d'une opération de type $B = A^D$, la variable d'entrée est un bit $D_i$ de D et le diagramme de la figure 1 est répété successivement pour chaque bit de D.

Les blocs d'instructions $\Pi_0$, $\Pi_1$ comprennent chacun un ensemble d'instructions à exécuter, par exemple des opérations d'addition, de multiplication, de mise à jour de variable, etc. Le nombre et /ou le type des instructions peuvent être différents d'un bloc d'instructions $\Pi_0$, $\Pi_1$ à l'autre.

De nombreux algorithmes cryptographiques sont basés sur le diagramme de principe de la figure 1. C'est notamment le cas des algorithmes cryptographiques basés sur des calculs d'exponentiation du type $B = A^D$, où A, B sont des nombres entiers le plus souvent de grande taille, et D un nombre prédéterminé de M bits.

Les nombres A, B peuvent correspondre par exemple à un texte chiffré ou à chiffrer, une donnée signée ou à signer, une donnée vérifiée ou à vérifier, etc. Le nombre D peut correspondre à des éléments de clés, privées ou publiques utilisées pour le chiffrage ou le déchiffrage des nombres A, B.

A titre d'exemple des algorithmes tels que l'algorithme dit "Square-And-Multiply", l'algorithme dit "Right-To-Left binary algorithm", l'algorithme dit "(M, $M^3$) algorithm" peuvent être utilisés pour réaliser des calculs d'exponentiation.

Un utilisateur malveillant peut éventuellement engager des attaques, visant à découvrir notamment des informations confidentielles (comme par exemple la clé D ou une donnée dérivée de cette clé) manipulées dans des traitements effectués par le dispositif de calcul exécutant une opération d'exponentiation.

Une attaque simple, dite "timing attack", contre l'algorithme de la figure 1 consiste à mesurer le temps nécessaire au dispositif pour exécuter un bloc d'instructions entre deux étapes de test. Si les temps d'exécution des blocs d'instructions $\Pi_0$, $\Pi_1$ sont différents, alors il est facile d'identifier un bloc d'instructions $\Pi_0$ ou $\Pi_1$ et d'en déduire la valeur de la variable d'entrée associée.

Pour se prémunir contre cette attaque, il est possible d'ajouter des instructions fictives dans le bloc d'instructions $\Pi_0$ ou $\Pi_1$ le plus court (un bloc d'instruction est " le plus court" si le temps mis pour le réaliser est le plus petit) de sorte à ce que les deux blocs d'instructions $\Pi_0$, $\Pi_1$ soient de même durée.

Les attaques à canaux cachés peuvent aboutir sur des algorithmes tels que celui de la figure 1 si les blocs d'instructions $\Pi_0$, $\Pi_1$ ne sont pas équivalents vis-à-vis de ces attaques.

Le terme "équivalent" doit être compris ici et dans tout ce qui suit de la manière suivante. Deux instructions $INST_1$, $INST_2$ (ou deux blocs d'instructions $\Pi_0$, $\Pi_1$) sont dits *équivalentes* ( on note $INST_0 \sim INST_1$) s'il n'est pas possible de les différencier par une attaque à canal caché. C'est le cas notamment si la grandeur physique mesurée au cours de l'attaque suit la même évolution pour les deux instructions. A noter toutefois que deux instructions peuvent être équivalentes vis-à-vis d'une attaque à canal caché et ne pas être équivalentes vis-à-vis d'une autre attaque à canal caché.

Dans le même esprit, on dira que deux instructions (ou blocs d'instructions) sont *égales* si, lorsqu'elles sont utilisées avec les mêmes données d'entrée, elles produisent des données de sortie identiques.

Il est connu de se prémunir contre les attaques à canaux cachés en ajoutant des instructions fictives à l'algorithme. On supposera dans ce qui suit qu'une instruction fictive est équivalente à une instruction réelle similaire. Par exemple l'instruction i<-i-0 est supposée équivalente à l'instruction i<-i-1.

Dans le cas de l'algorithme de la figure 1, il est ainsi connu de réaliser un bloc d'instructions $\Pi_1$ fictif après chaque bloc d'instructions $\Pi_0$, et de réaliser de manière symétrique un bloc d'instructions $\Pi_0$ fictif avant chaque bloc d'instructions $\Pi_1$ (voir les étapes en pointillés sur la figure 1). Ainsi, quelle que soit la valeur de la donnée d'entrée, on réalisera un bloc d'instructions $\Pi_0$ et un bloc d'instructions $\Pi_1$, dans l'ordre, l'un ou l'autre étant fictif, de sorte qu'il ne soit pas possible de prédire la valeur de la donnée d'entrée, les.grandeurs physiques relatives à un calcul étant équivalentes. On note ainsi :

$$(\Pi_0 \ || \ \Pi_{1(fictif)}) \ \sim \ (\Pi_{0(fictif)} \ || \ \Pi_1).$$

La notation "||" signifie la réalisation successive de blocs d'instructions $\Pi_0$, $\Pi_1$, ( ou plus généralement la réalisation successive de deux instructions).

Si cette solution est efficace contre les attaques à canaux cachés, elle présente cependant l'inconvénient de multiplier en moyenne par deux le temps d'exécution de l'algorithme.

En effet, dans le cas d'un algorithme non protégé utilisant M données d'entrée (par exemple les M bits d'une donnée D), on réalise statistiquement en moyenne M/2 blocs d'instructions $\Pi_0$ et M/2 blocs d'instructions $\Pi_1$. Si T0, respectivement T1 sont les temps moyens d'exécution d'un bloc d'instructions $\Pi_0$, respectivement $\Pi_1$, alors le temps moyen d'exécution de l'algorithme non protégé est égal à M*(T0 + T1) / 2.

Par contre, dans le cas de l'algorithme protégé par des blocs d'instructions $\Pi_0$, $\Pi_1$ fictifs, on réalise systématiquement un bloc d'instructions $\Pi_0$ et un bloc d'instructions $\Pi_1$ pour chacune des M données d'entrée. En conséquence, le temps moyen d'exécution de l'algorithme protégé par des blocs d'instructions fictifs est égal à M*(T0 + T1).

Le document E. OSWALD et al.: "Randomized addition-subtraction chains as a countermeasure against power attacks", Cryptographic Hardware and Embedded Systems - CHES 2001. Third International Workshop. Proceedings (Lecture Notes in Computer Science Vol.2162), Springer-Verlag Berlin, pp. 39-50 décrit une mesure contre l'analyse directe d'un calcul cryptographique. Cet algorithme utilise une boucle d'instructions utilisant une variable indexée.

Le document P.Y. Liardet et al.: "Preventing SPA/DPA in ECC systems using the Jacobi form", Cryptographic Hardware and Embedded Systems - CHES 2001. Third International Workshop. Proceedings (Lecture Notes in Computer Science Vol.2162), Springer-Verlag Berlin, pp. 391-401 décrit une mesure contre l'analyse directe d'un calcul cryptographique sur une courbe elliptique, où l'addition et le doublement de points sont mis en oeuvre par le même code, de manière à les rendre indiscernables.

Un premier but de l'invention est de proposer un nouvel algorithme cryptographique sécurisé contre les attaques à canaux cachés. Un deuxième but de l'invention est un procédé cryptographique protégé et plus rapide que les algorithmes protégés existants.

Ce but est atteint par un procédé de calcul cryptographique selon l'invention, caractérisé en ce que, pour exécuter un bloc d'instructions choisi ($\Pi_j$) en fonction d'une variable d'entrée ($D_i$) parmi N blocs d'instructions prédéfinis ($\Pi_1$, ..., $\Pi_N$), on exécute un nombre prédéfini ($L_j$) de fois un bloc commun ($\Gamma(k,s)$) aux N blocs d'instructions prédéfinis ($\Pi_1$, ..., $\Pi_N$), le nombre prédéfini ($L_j$) étant associé au bloc d'instructions choisi ($\Pi_j$).

En d'autres termes, selon l'invention, on réalise un seul bloc élémentaire, le bloc élémentaire commun, quelle que soit la variable d'entrée. Le bloc élémentaire commun est exécuté un nombre prédéfini de fois, selon la variable d'entrée. Contrairement aux procédés connus, on n'exécute pas des blocs d'instructions différents en fonction de la variable d'entrée.

Ainsi, avec l'invention, Il n'est alors pas possible de déterminer par une attaque à canal caché quel bloc d'instructions est exécuté. Un procédé selon l'invention est donc bien protégé.

Le nombre prédéfini ($L_j$) est variable d'un bloc d'instructions prédéfini ($\Pi_1$, ..., $\Pi_N$) à l'autre.

Le bloc commun ($\Gamma(k,s)$) comprend de préférence au moins une instruction de calcul ($\gamma(k,s)$) équivalente vis-à-vis d'une attaque à canal caché à une instruction de calcul de chaque bloc prédéfini ($\Pi_1$, ..., $\Pi_N$).

Le bloc commun ($\Gamma(k,s)$) peut également comprendre une instruction de mise à jour d'un pointeur de boucle (k) indiquant un nombre d'exécutions déjà exécutées du bloc commun ($\Gamma(k,s)$).

Si nécessaire, le bloc commun ($\Gamma(k,s)$) peut comprendre en complément une instruction de mise à jour d'un pointeur d'état (s) indiquant si le nombre prédéfini ($L_j$) a été atteint.

La valeur du pointeur de boucle (k) et / ou la valeur du pointeur d'état (s) sont fonction de la valeur de la variable d'entrée (Di) et / ou du nombre d'instructions du bloc d'instructions ($\Pi_j$) associé à la valeur de la variable d'entrée.

De préférence, si plusieurs blocs communs sont possibles, le bloc commun est choisi minimal, en ce sens qu'il comprend un nombre d'instructions minimal et / ou qu'il s'effectue en un temps minimal.

De préférence encore, pour réaliser successivement plusieurs blocs d'instructions choisis parmi les N blocs d'instructions prédéfinis ($\Pi_1$, ..., $\Pi_N$), chaque bloc d'instruction choisi étant sélectionné en fonction d'une variable d'entrée ($D_i$) associée à un indice d'entrée (i),

on exécute un nombre total ($L_T$) de fois le bloc commun ($\Gamma(k,s)$), le nombre total ($L_T$) étant égal à une somme des nombres prédéfinis ($L_j$) associés à chaque bloc d'instructions choisi ($\Pi_j$).

Là encore, pour exécuter successivement plusieurs blocs d'instructions, on exécute seulement le bloc commun un nombre approprié de fois ; ceci quels que soient les blocs d'instructions à exécuter. Il n'est donc pas possible de prédire à quel bloc d'instructions est associé le bloc commun en cours d'exécution. Une attaque à canal caché ne peut donc pas aboutir.

A noter qu'un même bloc d'instructions ($\Pi_j$) peut être choisi plusieurs fois selon la variable d'entrée associée (Di) à l'indice d'entrée (i).

Selon un mode de réalisation de l'invention, une ou plusieurs relations mathématiques sont utilisées pour mettre à jour le pointeur de boucle et / ou le pointeur d'état et / ou des indices de registres utilisés pour la mise en oeuvre du procédé cryptographique et / ou la ou les variables d'entrées. Selon un autre mode de réalisation de l'invention, la mise à jour se fait en utilisant une table à plusieurs entrées. Ces modes de réalisation seront détaillés plus longuement par la suite à l'aide d'exemples pratiques.

L'invention concerne également un procédé d'obtention d'un bloc commun ($\Gamma(k,s)$) à N blocs d'instructions ($\Pi_1$, ..., $\Pi_N$) prédéfinis. Ledit procédé est susceptible d'être utilisé pour la mise en oeuvre d'un procédé de calcul cryptographique sécurisé selon l'invention et tel que celui décrit ci-dessus.

Selon l'invention, on obtient un bloc commun ($\Gamma(k,s)$) en réalisant les étapes suivantes :

E1 : décomposition de chaque bloc d'instructions prédéfini ($\Pi_1$, ..., $\Pi_N$) en une suite de blocs élémentaires ($\gamma$) équivalents vis-à-vis d'une attaque à canal caché, et classement de l'ensemble des blocs élémentaires (par exemple par attribution d'un rang),

E2 : recherche d'un bloc élémentaire commun ($\gamma(k,s)$) équivalent à tous les blocs élémentaires ($\gamma$) de tous les blocs d'instructions prédéfinis,

E3 : recherche d'un bloc commun ($\Gamma(k,s)$) comprenant au moins le bloc élémentaire commun ($\gamma(k,s)$) précédemment obtenu lors de l'étape E2 et une instruction de mise à jour d'un pointeur de boucle (k) telle que une exécution du bloc élémentaire commun associée à la valeur du pointeur de boucle (k) et une exécution du bloc élémentaire de rang égal à la valeur du pointeur de boucle (k) soient identiques.

Si nécessaire, au cours de l'étape E1, une ou des instructions fictives peuvent être ajoutées à la série des instructions d'un ou plusieurs blocs d'instructions. Ceci peut faciliter la décomposition de chaque blocs d'instructions en des blocs élémentaires tous équivalents vis-à-vis d'une attaque à canal caché.

Au cours de l'étape E1, on découpe chaque bloc d'instructions prédéfinis $\Pi_1$ à $\Pi_N$ en blocs élémentaires équivalents vis-à-vis d'une attaque donnée ; les blocs élémentaires sont classés. Par exemple :

$$\Pi_1 \; = \; \gamma 1 \; || \; \gamma 2 \; || \; \gamma 3 \; ; \; \Pi_2 \; = \; \gamma 4 \; || \; \gamma 5 \; ; \; \ldots$$

Plus généralement, chaque bloc d'instructions $\Pi_1$, ..., $\Pi_N$ se décompose ainsi :

$$\Pi_1 \; = \; \gamma(C_1) \; || \; \ldots \; || \; \gamma(C_1+L_1 \; -1),$$
$$\Pi_2 \; = \; \gamma(c_2) \; || \; \ldots \; || \; \gamma(c_2+L_2-1),$$
$$\ldots$$
$$\Pi_j \; = \; \gamma(c_j) \; || \; \ldots \; || \; \gamma(c_j+L_j-1),$$
$$\ldots$$
$$\Pi_N \; = \; \gamma(c_N) \; || \; \ldots \; || \; \gamma(c_N+L_N-1)$$

avec

$$C_1 \; = \; 0$$
$$C_2 \; = \; L_1$$
$$\ldots$$
$$C_j \; = \; L_1+L_2+ \; \ldots \; + \; L_{j-1}$$
$$\ldots$$
$$C_N \; = \; L_1+ \; \ldots \; L_{N-1}$$

$L_j$ est le nombre de blocs élémentaires nécessaires pour décomposer complètement le bloc prédéfini d'instructions $\Pi_j$.

Au cours de l'étape E2, on recherche un bloc élémentaire commun $\gamma$ tel que chaque bloc d'instructions $\Pi_j$ ($1 \leq j \leq N$) peut être exprimé sous forme d'une répétition $L_j$ fois du bloc élémentaire commun $\gamma$.

De préférence, le bloc commun est choisi minimal. En d'autres termes, il comprend un nombre minimum d'instructions et / ou il s'exécute en un temps minimal.

Au cours de l'étape E3, on recherche un bloc commun comprenant :

- un ou plusieurs blocs élémentaires communs obtenus lors de l'étape E2, et
- une instruction de mise à jour d'un pointeur de boucle (k) tel que une exécution du bloc élémentaire commun associée à la valeur du pointeur de boucle (k) et une exécution du bloc élémentaire de rang égal à la valeur du pointeur de boucle (k) soient identiques.

Si nécessaire, un pointeur d'état s peut également être utilisé en complément du pointeur de boucle :

- le pointeur d'état s indique si le bloc élémentaire commun a déjà été exécuté un nombre prédéfini de fois correspondant au nombre Lj de blocs élémentaires décomposant un bloc d'instructions $\Pi_j$ donné ; dans un exemple, le pointeur d'état s est égal à 1 lorsque le nombre prédéfini $L_j$ de blocs élémentaires a été exécuté, et il est égal à 0 sinon.
- le pointeur de boucle indique le rang du bloc élémentaire à exécuter parmi l'ensemble des blocs élémentaires. De manière très générale, le pointeur de boucle peut être défini dans tous les cas selon l'équation 1 suivante :

$$\texttt{k <- (/s).(k+1) + s.f(D}_\texttt{i}\texttt{)}$$

$D_i$ est la variable d'entrée permettant de sélectionner un bloc d'instructions à exécuter, s est le pointeur d'état, et f est une fonction logique de la variable d'entrée $D_i$ associée à un bloc d'instructions prédéfini $\Pi_j$ à exécuter, et /s est le complément du pointeur s (fonction NON logique).

L'équation ci-dessus donnant la valeur de k est obtenue par le raisonnement suivant.

Lorsqu'on réalise un bloc d'instructions $\Pi_j$, le pointeur de boucle k doit être incrémenté de 1 à chaque exécution du bloc élémentaire commun (associée à un bloc élémentaire équivalent de la décomposition du bloc $\Pi_j$) tant que s = 0, c'est-à-dire tant que le nombre de blocs élémentaires associés au bloc $\Pi_j$ n'a pas été atteint. Ceci se traduit par l'instruction :

$$\texttt{k <- (k+1) lorsque s = 0}$$

Inversement, lorsqu'on réalise le bloc élémentaire commun associé au dernier bloc élémentaire du bloc $\Pi_j$ (c'est-à-dire lorsque s = 1), il est nécessaire de modifier k de sorte à réaliser le bloc élémentaire commun associé au premier bloc élémentaire du bloc d'instructions suivant $\Pi_{j'}$. Ceci se traduit par l'instruction suivante :

$$\texttt{k <- f(D}_\texttt{i}\texttt{) lorsque s = 1}$$

où $D_i$ est la variable d'entrée qui conditionne le choix du calcul $\Pi_{j'}$ à réaliser.

En combinant les deux dernières instructions, on obtient finalement l'équation 1.

L'équation ci-dessus donnant la valeur de k en fonction de s est valable dans tous les cas. Dans certains cas particuliers, cette équation peut être modifiée comme on le verra mieux plus loin dans des exemples pratiques.

L'invention et les avantages qui en découlent apparaîtront plus clairement à la lecture de la description qui suit d'exemples de mise en oeuvre d'un procédé cryptographique sécurisé selon l'invention. La description est à lire en référence aux dessins annexés dans lesquels :

- la figure 1 est un diagramme générique de procédés connus et susceptibles d'être protégés selon l'invention,
- la figure 2 est un diagramme du procédé générique de la figure 1 protégé selon l'invention,
- les figures 3 et 4 détaillent la réalisation de certaines étapes du procédé de la figure 2 dans le cas de procédés d'exponentiation connus, protégés selon l'invention.

Dans les exemples qui suivent, on va décrire notamment l'obtention d'un bloc élémentaire commun selon l'invention et l'utilisation de ce bloc élémentaire, dans les cas pratiques de procédés de calcul cryptographique.

<u>Exemple 1</u>

Dans un premier exemple pratique, on considère un algorithme d'exponentiation de type "Square-and-Multiply", qui permet de réaliser une opération d'exponentiation de type $B = A^D$, où $D = (D_{M-1}, ..., D_0)$ est un nombre de M bits. La forme connue de cet algorithme peut être représentée comme suit :

Initialisation :

$$R_0 \;\text{<-}\; 1 \;;\; R_1 \;\text{<-}\; A \;\;;\; i \;\text{<-}\; M\text{-}1$$

Tant que $1 \geq 0$, répéter :
Si $D_i = 1$, alors réaliser $\Pi_0$ :

$$R_0 \;\text{<-}\; R_0 \times R_0$$

$$R_0 \;\text{<-}\; R_0 \times R_1$$

$$i \;\text{<-}\; i\text{-}1$$

Si $D_i = 0$, alors réaliser $\Pi_1$ :

$$R_0 \;\text{<-}\; R_0 \times R_0$$

$$i \;\text{<-}\; i\text{-}1$$

Retourner $R_0$.

Algorithme 1 "Square-and-Multiply" non-protégé

$R_0$, $R_1$ sont des registres d'un dispositif de calcul adapté pour la mise en oeuvre de l'algorithme, et i est un indice de boucle repérant les différents bits de D. Selon la valeur de $D_i$, on exécute $\Pi_j = \Pi_0$ ou $\Pi_j = \Pi_1$.
Dans l'algorithme 1, les blocs d'instructions $\Pi_0$, $\Pi_1$ sont réalisés selon la valeur d'un bit $D_i$ de l'exposant D, et on décrémente l'indice de boucle i à la fin de chaque bloc d'instructions $\Pi_0$, $\Pi_1$ de sorte à traiter successivement tous les bits $D_i$ de D.
Dans l'algorithme 1, les bloc d'instructions $\Pi_0$, $\Pi_1$ ne sont pas équivalents vis-à-vis d'une attaque à canal caché, notamment parce ce que le nombre d'instructions de $\Pi_0$ est différent du nombre d'instructions de $\Pi_1$.
Pour protéger l'algorithme 1 selon l'invention, on recherche un bloc élémentaire commun $\Gamma$ susceptible d'être utilisé pour l'exécution des blocs $\Pi_0$, $\Pi_1$.
Pour cela, on décompose tout d'abord chaque bloc d'instructions $\Pi_0$, $\Pi_1$ en une suite de blocs élémentaires, tous équivalents entre eux vis-à-vis d'une attaque donnée.
Le bloc d'instructions $\Pi_0$ peut s'écrire :

$$R_0 \;\text{<-}\; R_0 \times R_0$$

$$i \;\text{<-}\; i\text{-}0$$

$$R_0 \;\text{<-}\; R_0 \times R_1$$

$$i \;\text{<-}\; i\text{-}1$$

L'instruction i <- i-0 est fictive : elle ne modifie aucune variable, aucune donnée manipulée par l'algorithme 1.
$\Pi_0$ peut alors se décomposer en deux blocs élémentaires :

$$\Pi_0 = \gamma 0 \;||\; \gamma 1$$

avec

$$\gamma 0 \;:\; R_0 \;<-\; R_0 \times R_0$$

$$i \;<-\; i\text{-}0$$

$$\gamma 1 \;:\; R_0 \;<-\; R_0 \times R_1$$

$$i \;<-\; i\text{-}1$$

$\Pi_1$ se décompose de la même façon en un bloc élémentaire :
$\Pi_1 = \gamma 2$ avec

$$\gamma 2 \;:\; R_0 \;<-\; R_0 \times R_0$$
$$i \;<-\; i\text{-}1$$

On note que les blocs $\gamma 0$, $\gamma 1$, $\gamma 2$ sont tous équivalents ($\gamma 0 \sim y1 \sim \gamma 2$) vis à vis d'une attaque à canal caché si on suppose que les instructions $R_0 <- R_0 \times R_0$ et $R_0 <- R_0 \times R_1$ sont équivalentes et que les instructions i <- i-0 et i <- i-1 sont équivalentes.

On a ainsi décomposé chaque bloc d'instructions $\Pi_0$, $\Pi_1$ en un nombre variable (d'un bloc d'instructions à l'autre) de blocs élémentaires, tous équivalents les uns aux autres.

On définit ensuite un pointeur d'état s et un pointeur de rang k. Lorsqu'un bloc d'instructions $\Pi_j$ est en cours d'exécution :

- k est utilisé pour indiquer quel bloc élémentaire $\gamma k$ doit être réalisé ; la valeur de k dépend notamment du bloc $\Pi_j$ en cours d'exécution (et donc de la variable d'entrée $D_i$ testée) et de l'état d'avancement de l'exécution du bloc $\Pi_j$
- s est utilisé pour indiquer si au moins un bloc élémentaire $\gamma k$ doit être encore être réalisé ou si le bloc $\gamma k$ en cours est le dernier du bloc d'instructions $\Pi_j$.

Dans le cas de l'exemple ci-dessus relatif à l'algorithme 1, on peut résumer l'évolution des pointeurs k, s par le tableau ci-dessous.

<u>tableau 1</u>

|  |  | k | s |
|---|---|---|---|
| (Di = 1) | $\gamma 0 : R_0 <- R_0 \times R_0$ ; i <- i-0 | 0 | 0 |
|  | $\gamma 1 : R_0 <- R_0 \times R_1$ ; i <- i-1 | 1 | 1 |
| ($D_i = 0$) | $\gamma 2 : R_0 <- R_0 \times R_0$ ; i <- i-1 | 2 | 1 |

s peut être calculé à partir de k : si le bloc élémentaire $\gamma k$ qui doit être réalisé est le dernier bloc élémentaire d'un bloc $\Pi$, alors s = 1, sinon s = 0.

Dans le cas de l'algorithme 1, on peut par exemple calculer s par la relation suivante :

$$s = (k \bmod 2) + (k \,\mathrm{div}\, 2) \qquad\qquad (EQ\ a)$$

"div" désigne une division entière et "mod" une réduction modulaire. A partir de l'équation 1, on retrouve les différentes valeurs de s en fonction de k (cf tableau 1).

La mise à jour de k peut être obtenue à partir de s et de $D_i$, $D_i$ étant représentatif du bloc $\Pi_j$ en cours :

- si s = 0 (bloc $\Pi_j$ en cours de réalisation), k est incrémenté de 1 à chaque réalisation d'un bloc élémentaire $\gamma$, pour effectuer ensuite le bloc élémentaire $\gamma$ suivant.
- si s = 1, le bloc $\Pi$ en cours est terminée et le bloc élémentaire $\gamma$ suivant à effectuer est le premier bloc élémentaire du prochain bloc $\Pi_j$ à exécuter ; k dépend donc de $D_i$.

De ce qui précède, on en déduit que k peut être obtenu par la relation suivante :

$$k \ \textless\text{-} \ (/s)\times(k{+}1) \ + \ s\times f(D_i) \qquad\qquad (EQ\ b)$$

/s est la valeur complémentaire de s (fonction NON logique), et f est une fonction logique de $D_i$, qui dépend de l'algorithme à protéger (voir aussi figure 3).

Dans le cas de l'algorithme 1, on peut par exemple choisir $f(D_i) = 2\times(/D_i)$

Ainsi, avec l'équation 3 :

$$k \ \textless\text{-} \ (/s)\times(k{+}1) \ + \ s\times2\times(/D_i), \qquad\qquad (EQ\ c)$$

on retrouve les différentes valeurs de k en fonction de s et de $D_i$ (cf tableau 1).

On définit finalement un bloc élémentaire commun $\gamma(k, s)$, équivalent aux blocs élémentaires $\gamma0$, $\gamma1$, $\gamma2$ et tel que $\gamma(0, 0) = \gamma0$, $\gamma(1, 1) = \gamma1$ et $\gamma(2, 1) = \gamma2$.

Pour l'algorithme 1, on peut par exemple choisir :

$\gamma(k, s)$ :

$$R_0 \ \textless\text{-} \ R_0\times R_{k\ mod\ 2}$$

$$i \ \textless\text{-} \ i \ \text{-} \ s$$

En utilisant le bloc élémentaire commun $\gamma(k, s)$, l'algorithme 1 peut finalement s'écrire (voir aussi figure 3) :

Initialisation :

$$R_0 \ \textless\text{-} \ 1 \ ; \ R_1 \ \textless\text{-} \ A \ \ ; \ i \ \textless\text{-} \ M{-}1$$

Tant que $1 \geq 0$, répéter le bloc commun $\Gamma(k, s)$ :

$$k \ \textless\text{-} \ (/s)\times(k{+}1) \ + \ s\times2\times(/D_i)$$

$$s \ \textless\text{-} \ (k\ mod\ 2) \ + \ (k\ div\ 2)$$

$$\gamma(k,s) \ : \ \ R_0 \ \textless\text{-} \ R_0\times R_{k\ mod\ 2}$$
$$i \ \textless\text{-} \ i \ \text{-} \ s$$

Retourner $R_0$.

**EP 1 493 078 B1**

Algorithme 1 ptotégé (algorithme "Square-And-Multply" protégé)

Dans cet algorithme, un seul bloc commun $\Gamma(k, s)$ est utilisé, quelles que soient les valeurs de $D_i$. Dit autrement, quelle que soit la valeur de $D_i$, on exécute la même instruction ou le même bloc d'instructions. Dans le cas où $D_i = 0$, on exécute une seule fois le bloc $\Gamma(k, s)$. Dans le cas où $D_i = 1$, on exécute successivement deux fois le bloc commun $\Gamma(k, s)$.

Quelles que soient les valeurs des pointeurs k, s et quelle que soit la valeur de $D_i$, le bloc $\Gamma(k, s)$ associé est équivalent, vis-à-vis d'une attaque à canal caché, au bloc $\Gamma(k, s)$ précédemment exécuté et au bloc $\Gamma(k, s)$ exécuté ensuite. En conséquence, il n'est pas possible de les distinguer les uns des autres, et il n'est pas possible de savoir à quel bloc d'instructions $\Pi_j$ correspond le bloc commun $\Gamma(k, s)$ en cours d'exécution.

A noter, que par rapport à l'algorithme 1 non protégé, l'algorithme 1 protégé selon l'invention utilise le même nombre d'instructions de calcul (telles que des instructions de multiplication par exemple) pour aboutir au même résultat final. L'algorithme 1 protégé selon l'invention comprend simplement des étapes supplémentaires de mise à jour de pointeurs : de telles étapes sont beaucoup plus rapides et beaucoup moins consommatrices de ressources qu'une instruction de calcul telle qu'une multiplication. En conséquence, le temps d'exécution de l'algorithme protégé est quasiment le même que celui de l'algorithme 1 non protégé : Tex = 1.5*M*T0, T0 étant le temps d'exécution d'une multiplication.

A noter également que le bloc commun $\Gamma(k, s)$ n'est pas unique pour un même algorithme, comme on va le voir avec l'exemple 2.

Exemple 2

Dans le cas de l'algorithme "Square and Multiply", d'autres décompositions du bloc d'instructions $\Pi_0$ peuvent être envisagées, par exemple :

$$\Pi_0 = \gamma'0 \ || \ \gamma'1$$

avec

```
γ'0 :    R₀    <- R₀×R₀
         i     <- i-1

γ'1 :    R₀    <- R₀×R₁
         i     <- i-0
```

Cette décomposition est envisageable dans la mesure où l'instruction fictive i <- i-0 peut être exécutée à tout instant au cours du bloc $\Pi_0$. On constate dès lors que les blocs élémentaires $\gamma0$ et $\gamma2$ sont identiques. Le tableau 1 est alors modifié alors de la manière suivante.

tableau 2

|  |  | k | s |
|---|---|---|---|
| ($D_i = 1$) | $\gamma'0 : R_0 <- R_0 \times R_0$ ; i <- i-1 | 0 | 0 |
|  | $\gamma'1 : R_0 <- R_0 \times R_1$ ; i <- i-0 | 1 | 1 |
| ($D_i = 0$) | $\gamma'0 : R_0 <- R_0 \times R_0$ ; i <- i-1 | 0 | 1 |

Le pointeur s devient ici superflu dans la mesure où seules deux blocs élémentaires sont possibles $\gamma0$ et $\gamma1$. On obtient finalement le bloc élémentaire commun $\gamma(k, s)$ et l'algorithme protégé suivant (voir aussi figure 4) :

Initialisation :

**9**

$$R_0 \; \texttt{<-} \; 1 \; ; \; R_1 \; \texttt{<-} \; A \; ; \; i \; \texttt{<-} \; M\text{-}1; \; k \; \texttt{<-} \; 1$$

Tant que $1 \geq 0$, répéter le bloc commun $\Gamma$'(k,s) :

$$k \; \texttt{<-} \; (D_i) \; \texttt{ET} \; (/k)$$

$$\gamma'(s, k) \; : \; R_0 \; \texttt{<-} \; R_0 \times R_k$$

$$i \; \texttt{<-} \; i \; - \; (/k)$$

Retourner $R_0$.

Algorithme 2 protégé (algorithme "Square-And-Multiply" protégé, 2<sup>ème</sup> version)

Exemple 3

L'algorithme d'exponentiation dit "Right-To-Left binary algorithm" est assez similaire à l'algorithme "Square-And Multiply". Il permet de réaliser une opération de type $B = A^D$ en partant du bit le plus faible de D de la manière suivante :

Initialisation :

$$R_0 \; \texttt{<-} \; 1 \; ; \; R_1 \; \texttt{<-} \; A \; ; \; i \; \texttt{<-} \; 0$$

Tant que $i \leq M\text{-}1$, répéter :
Si $D_i = 1$, alors réaliser le bloc $\Pi_0$ :

$$R_0 \; \texttt{<-} \; R_0 \times R_1$$
$$R_1 \; \texttt{<-} \; R_1 \times R_1$$
$$i \; \texttt{<-} \; i\text{+}1$$

Si $D_i = 0$, alors réaliser le bloc $\Pi_1$ :

$$R_1 \; \texttt{<-} \; R_1 \times R_1$$
$$i \; \texttt{<-} \; i\text{+}1$$

Retourner $R_0$.

Algorithme dit "Right-To-Left binary algorithm"

Les blocs $\Pi_0$, $\Pi_1$ dans cet exemple peuvent se décomposer de la manière suivante :

tableau 3

|  |  | k | s |
|---|---|---|---|
| $\Pi_0$ ($D_i = 1$) | $\gamma0 : R_0$ <- $R_0 \times R_1$ ; i <- i+0 | 0 | 0 |
|  | $\gamma1 : R_1$ <- $R_1 \times R_1$ ; i <- i+1 | 1 | 1 |
| $\Pi_1$ ($D_i = 0$) | $\gamma0 : R_1$ <- $R_1 \times R_1$ ; i <- i+1 | 2 | 1 |

Ici également, comme seuls deux blocs élémentaires $\gamma 0$, $\gamma 1$ sont utilisés pour décomposer $\Pi_0$, $\Pi_1$, le pointeur s est inutile. On peut par exemple choisir le bloc élémentaire commun $\gamma(k)$ suivant :

$$\gamma(k) : \quad R_k \quad \texttt{<-} \quad R_k \times R_1$$
$$i \quad \texttt{<-} \quad i+k$$

et mettre à jour le pointeur k avant chaque réalisation du bloc $\gamma(k)$ en utilisant l'instruction $k \texttt{<-} k \oplus D_i$, où $\oplus$ désigne l'opérateur OU-Exclusif ($\oplus$). On obtient finalement l'algorithme 3 protégé ci-dessous :

Initialisation :

$$R_0 \texttt{<-} 1 ; R_1 \texttt{<-} A ; i \texttt{<-} 0 ; k \texttt{<-} 1$$

Tant que $1 \leq M-1$, répéter le bloc $\Gamma(k, s)$ :

$$k \texttt{<-} k \oplus D_i$$

$$\gamma(k) : \quad R_k \texttt{<-} R_k \times R_1$$
$$i \texttt{<-} i+k$$

Retourner $R_0$.

Algorithme 3 ("Right-To-Left binary algorithm" protégé)

Les exemples ci-dessus décrivent des algorithmes au cours desquels on exécute seulement deux blocs d'instructions $\Pi_0$ ou $\Pi_1$ en fonction de la valeur d'une variable d'entrée $D_i$. L'invention peut cependant s'appliquer à des algorithmes utilisant plus de deux blocs d'instructions $\Pi$.

Exemple 4

On considère dans cet exemple l'algorithme dit "(M, $M^3$) algorithm", connu sous la forme suivante :

Initialisation :

$$R_0 \texttt{<-} 1 ; R_1 \texttt{<-} A ; R_2 \texttt{<-} A^3 ;$$

$$D_{-1} \texttt{<-} 0 ; i \texttt{<-} M-1$$

Tant que $i \geq 0$, répéter :
Si $D_i = 0$, réaliser $H_0$ :

$$R_0 \texttt{<-} (R_0)^2$$

$$i \quad \texttt{<-} i-1$$

Si $D_i = 1$ ET ($D_{i-1} = 0$), réaliser $\Pi_1$ :

$$R_0 \quad \text{<-} \quad (R_0)^2$$

$$R_0 \quad \text{<-} \quad R_0 \times R_1$$

$$i \quad \text{<-} \quad i\text{-}1$$

Si $D_i = 1$ ET ($D_{i-1} = 1$), réaliser $\Pi_2$ :

$$R_0 \quad \text{<-} \quad (R_0)^2$$

$$R_0 \quad \text{<-} \quad (R_0)^2$$

$$R_0 \quad \text{<-} \quad R_0 \times R_2$$

$$i \quad \text{<-} \quad i\text{-}2$$

Retourner $R_0$.

Algorithme dit " (M, M$^3$) algorithm"

ET est la fonction ET logique. $R_0$, $R_1$, $R_2$ sont des registres du dispositif utilisé pour la mise en oeuvre de l'algorithme.

En remplaçant les carrés de type $(R_0)^2$ par des multiplications de type $R_0 \times R_0$, et en introduisant des instructions fictives de type i <- i-0, on peut décomposer l'algorithme (M, M$^3$) selon le tableau :

tableau 4

| | | k | s |
|---|---|---|---|
| $\Pi_0$ ($D_i = 0$) | $\gamma 0 : R_0 \text{<-} R_0 \times R_0$ ; i <- i-1 | 0 | 1 |
| $\Pi_1$ (Di = 1) et ($D_{i-1} = 0$) | $\gamma 1 : R_0 \text{<-} R_0 \times R_0$ ; i <- i-0 | 1 | 0 |
| | $\gamma 2 : R_0 \text{<-} R_0 \times R_1$ ; i <- i-1 | 2 | 1 |
| $\Pi_2$ (Di = 1) et ($D_{i-1} = 1$) | $\gamma 3 : R_0 \text{<-} R_0 \times R_0$ ; i <- i-0 | 3 | 0 |
| | $\gamma 4 : R_0 \text{<-} R_0 \times R_0$ ; i <- i-0 | 4 | 0 |
| | $\gamma 5 : R_0 \text{<-} R_0 \times R_2$ ; i <- i-2 | 5 | 1 |

Le tableau 4 permet de calculer assez aisément la valeur du pointeur k en fonction de s et de $D_i$, et ainsi que la valeur du pointeur s en fonction de k, comme précédemment. Par ailleurs, les blocs $\gamma 0$ à $\gamma 5$ sont tous équivalents vis-à-vis d'une attaque à canal caché, et on peut par exemple choisir le bloc élémentaire commun $\gamma(k, s)$ suivant :

$$\gamma(k, s) : \quad R_0 \quad \text{<-} \quad R_0 \times R_{s \times (k \, div \, 2)}$$
$$i \quad \text{<-} \quad i - s \times (k \bmod 2 + 1)$$

On en déduit finalement un algorithme 4 protégé :

Initialisation :

```
R₀ <- 1 ; R₁ <- A  ; R₂ <- A³ ;

D₋₁ <- 0 ; i <- M-1 ; s <- 1
```

Tant que i ≥ 0, répéter le bloc Γ(k, s) :

```
k     <- (/s)×(k+1) + s×(Dᵢ + 2×(Dᵢ ET Dᵢ₋₁))

s     <- /((k mod 2) ⊕ (k div 4))

γ(k,s) :  R₀     <- R₀×R₈ₓ(k div 2)
          i      <- i - s×(k mod 2 + 1)
```

Retourner $R_0$.

Algorithme 4 (algorithme (M, M³) protégé, 1ère version)

Exemple 5

Comme on l'a vu dans le cadre des exemples 1 et 2, pour un même algorithme, il est possible de choisir entre plusieurs blocs élémentaires communs γ(k) ou γ(k, s).

Dans le cas de l'algorithme (M, M³) par exemple, il est également possible de décomposer les blocs $H_0$, $\Pi_1$, $\Pi_2$ de la manière suivante :

<div align="center">tableau 5</div>

| | | k | s |
|---|---|---|---|
| $\Pi_0$ (Di = 0) | γ0 : $R_0$ <- $R_0 \times R_0$ ; i <- i-1 | 0 | 1 |
| $\Pi_1$ (Di = 1) et (D$_{i-1}$ = 0) | γ1: $R_0$ <- $R_0 \times R_0$ ; i <- i-0 | 0 | 0 |
| | γ2 : $R_0$ <- $R_0 \times R_1$ ; i <- i-1 | 1 | 1 |
| $\Pi_2$ (Di = 1) et (D$_{i-1}$ = 1) | γ3 : $R_0$ <- $R_0 \times R_0$ ; i <- i-0 | 0 | 0 |
| | γ4 : $R_0$ <- $R_0 \times R_0$ ; i <- i-0 | 1 | 0 |
| | γ5 : $R_0$ <- $R_0 \times R_2$ ; i <- i-2 | 2 | 1 |

Par rapport au tableau 4, seules les valeurs de k ont été modifiées.

Le tableau 5 permet de calculer, comme précédemment, la valeur du pointeur k en fonction de s et de $D_i$, la valeur du pointeur s en fonction de k, et la valeur dont doit être décrémenté l'indice i. Par ailleurs, on peut par exemple choisir le bloc élémentaire commun γ(k, s) suivant :

```
γ(k, s) :          R₀ <- R₀×Rₖₓₛ
                   i <- i - k×s - (/Di)
```

On en déduit finalement un algorithme 5 protégé :

Initialisation :

```
R₀ <- 1 ; R₁ <- A  ; R₂ <- A³ ;
```

```
D₋₁ <- 0 ; i <- M-1 ; s <- 1
```

Tant que i ≥ 0, répéter :

```
k     <- (/s)×(k+1)

s     <- s ⊕ Dᵢ ⊕ ((Dᵢ₋₁ ET (k mod 2))

Γ(k,s) :  R₀ <- R₀×Rₖₓₛ
          i <- i - k×s - (/Dᵢ)
```

Retourner $R_0$.

Algorithme 5 (algorithme (M, M³) protégé, 2ème version)

Comme on a pu le voir dans les exemples précédents, il est assez simple d'obtenir, dans le cadre de l'invention, une décomposition de chaque bloc $\Pi_j$ d'instructions en blocs élémentaires $\gamma_0$, $\gamma_1$, ..., $\gamma_{Lj}$.

Cependant, les relations liant le pointeur de boucle k, le pointeur d'état s à la variable $D_i$ et / ou à la variable j indexant les différents blocs $\Pi_0$, $\Pi_j$, ..., $\Pi_N$ deviennent complexes lorsque l'algorithme qu'on cherche à protéger est lui-même complexe (c'est-à-dire lorsqu'il utilise un nombre important de blocs $\Pi_j$ différents, lorsque chaque bloc $\Pi_j$ se décompose en un nombre important de blocs élémentaires $\gamma$, etc.). Pour certains algorithmes particulièrement complexes tels que les algorithmes cryptographiques sur courbe elliptique, cette difficulté peut même s'avérer lourde voire insurmontable.

Pour résoudre ou contourner cette difficulté, selon un autre mode de réalisation de l'invention, les liens entre les valeurs du pointeur de boucle k, du pointeur d'état s, de l'indexe des registres utilisés, de l'indexe i de la variable D, de l'indexe j des blocs $\Pi_j$, etc. sont exprimés sous la forme d'une table U à plusieurs entrées comme on va le voir dans les exemples ci-dessous.

Dans la mise en oeuvre pratique de l'invention, la dite table U pourra être par exemple mémorisée dans une mémoire, effaçable ou non, du dispositif utilisé. La mise à jour des pointeurs se fera alors par une lecture dans la mémoire d'une ou plusieurs valeurs dans la matrice U.

Exemple 6

On considère à nouveau la décomposition en blocs élémentaires de l'algorithme "Square and Multiply" :

tableau 6 = tableau 2

| | | k | s |
|---|---|---|---|
| ($D_i$ = 1) | $\gamma 0 : R_0 <- R_0 \times R_0$ ; i <- i-0 | 0 | 0 |
| | $\gamma 1 : R_0 <- R_0 \times R_1$ ; i <- i-1 | 1 | 1 |
| ($D_i$ = 0) | $\gamma 2 : R_0 <- R_0 \times R_0$ ; i <- i-1 | 2 | 1 |

A chaque ligne du tableau 6 correspond une valeur différente de k. On peut écrire chaque bloc élémentaire $\gamma k$ sous la forme suivante :

```
γₖ = [R_U(k,0) <- R_U(k,1)×R_U(k,2) ; i <- i - U(k,3)]
```

où U(k,1) est l'élément de la ligne k et de la colonne 1 de la matrice suivante :

$$\left(U_{k,1}\right)_{\substack{0 \le k \le 2 \\ 0 \le 1 \le 3}} = \begin{pmatrix} 0 & 0 & 0 & 0 \\ 0 & 0 & 1 & 1 \\ 0 & 0 & 0 & 1 \end{pmatrix}$$

La matrice U est construite de la manière suivante. Chaque ligne de la matrice correspond à un bloc élémentaire $\gamma$k d'indice k. A chaque colonne est associé un indice susceptible de varier d'un bloc élémentaire $\gamma$k à l'autre. Ici, la colonne 0 est associée à l'indice du registre dans lequel est mémorisé le résultat de l'instruction $R_\alpha$ <- $R_\alpha \times R_\beta$ ($\alpha$, $\beta$ sont égaux à 0 ou 1 ici). La colonne 1 et la colonne 2 sont associées aux indices des registres dont on effectue le produit par l'instruction $R_\alpha$ <- $R_\alpha \times R_\beta$. Enfin, la colonne 3 est associée aux variations de l'index i. La matrice U s'obtient ainsi très simplement à partir du tableau récapitulant la décomposition des blocs $\Pi_j$ en blocs élémentaires $\gamma$k.

Les colonnes constantes de la matrice étant sans intérêt, elles peuvent être supprimées pour donner une matrice réduite, plus facile à mémoriser et à utiliser. On obtient ainsi le bloc élémentaire commun $\gamma$(k) :

$$\gamma(k) = [R_0 \texttt{ <- } R_0 \times R_{U(k,0)} \texttt{ ; } i \texttt{ <- } i - U(k,1)]$$

avec, pour $0 \le k \le 2$ et $0 \le l \le 1$ :

$$\left(U(k,1)\right)_{\substack{0 \le k \le 2 \\ 0 \le 1 \le 1}} = \begin{pmatrix} 0 & 0 \\ 1 & 1 \\ 0 & 1 \end{pmatrix}$$

On en déduit finalement l'algorithme complet protégé selon l'invention

Initialisation :

$$R_0 \texttt{ <- } 1 \texttt{ ; } R_1 \texttt{ <- } A \texttt{ ; } i \texttt{ <- } M\texttt{-}1 \texttt{ ; } s \texttt{ <- } 1$$

Tant que $i \ge 0$, répéter le bloc $\Gamma$(k, s) :

$$k \texttt{ <- } (/s) \times (k+1) + s \times 2 \times (/D_i)$$

$$s \texttt{ <- } U(k,1)$$

$$\gamma(k, s) : R_0 \texttt{ <- } R_0 \times R_{U(k,0)}$$
$$i \texttt{ <- } i - s$$

Retourner $R_0$

Algorithme 6 ("Square and Multiply" protégé, 3<sup>ème</sup> version)

L'utilisation d'une matrice est une méthode très générale, beaucoup plus générale que les relations empiriques utilisées dans les exemples 1 à 5 pour expliciter les liens entre les différents indices utilisés.

L'expression des liens entre les indices sous la forme d'une matrice à plusieurs entrées présente l'avantage d'être beaucoup plus simple à mettre en oeuvre et surtout d'être exploitable pour tous les algorithmes cryptographiques connus, y compris les plus complexes, comme on va le voir dans quelques exemples d'algorithmes de calcul cryptographique sur courbes elliptiques (exemples 8 et 9).

Exemple 7

On considère à nouveau ici l'algorithme (M, M3) et son tableau de décomposition :

tableau 7 = tableau 4

|  |  | k | s |
|---|---|---|---|
| $\Pi_0$ ($D_i$ = 0) | $\gamma_0$ : $R_0$ <- $R_0 \times R_0$ ; i <- i-1 | 0 | 1 |
| $\Pi_1$ ($D_i$ = 1) et ($D_{i-1}$ = 0) | $\gamma 1$ : $R_0$ <- $R_0 \times R_0$ ; i <- i-0 | 1 | 0 |
|  | $\gamma 2$ : $R_0$ <- $R_0 \times R_1$ ; i <- i-1 | 2 | 1 |
| $\Pi_2$ (Di = 1) et ($D_{i-1}$ = 1) | $\gamma 3$ : $R_0$ <- $R_0 \times R_0$ ; i <- i-0 | 3 | 0 |
|  | $\gamma 4$ : $R_0$ <- $R_0 \times R_0$ ; i <- i-0 | 4 | 0 |
|  | $\gamma 5$ : $R_0$ <- $R_0 \times R_2$ ; i <- i-2 | 5 | 1 |

Du tableau 7, on déduit aisément la matrice suivants :

$$
\left(U(k, 1)\right)_{\substack{0 \le k \le 5 \\ 0 \le 1 \le 2}} = \begin{pmatrix} 0 & 1 & 1 \\ 0 & 0 & 0 \\ 1 & 1 & 1 \\ 0 & 0 & 0 \\ 0 & 0 & 0 \\ 2 & 2 & 1 \end{pmatrix}
$$

une expression possible d'un bloc élémentaire commun $\gamma(k)$ :

$$
\gamma(k) = [R_0 <- R_0 \times R_{U(k,0)} ; i <- i - R_{U(k,1)}]
$$

et un algorithme protégé utilisant le bloc élémentaire commun $\gamma(k)$ :

Initialisation :

$$
R_0 <- 1 ; R_1 <- A ; R_2 <- A^3 ;
$$

$$
i <- M-1 ; s <- 1
$$

Tant que $1 \ge 0$, répéter le bloc commun $\Gamma(k, s)$ :

$$
k <- (/s) \times (k+1) + s \times (D_i + 2 \times (/D_i \text{ ET } D_{i-1}));
$$

$$
s <- U(k,2)
$$

$$\gamma(k,s) : \quad R_0 <- R_0 \times R_{U(k,0)} ;$$
$$i <- i - U(k,1)$$

Retourner $R_0$.

Algorithme 7 (algorithme (M, M$^3$) protégé, 3$^{ème}$ version)

Exemple 8

On considère un algorithme de calcul cryptographique sur une courbe elliptique E non super singulière définie sur un corps binaire $F_{2q}$ par l'équation de Weierstrass suivante :

$$E/\mathcal{F}_2 q : Y^2 + X \times Y = X^3 + a \times X^2 + b \qquad (EQ\ d)$$

où X, Y sont les coordonnées affines d'un point P de la courbe E.
Les opérations de base d'un algorithme cryptographique sur courbes elliptiques sont les opérations de doublement de points et les opérations d'addition de deux points distincts.
L'opération de doublement d'un point est définie par :

$$P3(X3, Y3) = 2 \times P1(X1, Y1)$$

avec

$$X3 = a + \lambda^2 + \lambda$$

$$Y3 = (X1+X3) \times \lambda + X3 + Y1$$

et

$$\lambda = X1 + (Y1/X1)$$

L'opération d'addition de deux points distincts est définie par :

$$P(X3, Y3) = P1(X1, Y1) + P2(X2, Y2)$$
$$X3 = a + \lambda^2 + \lambda + X1 + X2$$
$$Y3 = (X1 + X3) \times \lambda + X3 + Y1$$
$$et\ \lambda = (Y1 + Y2) / (X1 + X2)$$

Dans le tableau 8, on a décomposé l'opération de doublement de points et l'opération d'addition de deux points distincts sous la forme chacune d'un bloc élémentaire $\gamma 0$, $\gamma 1$ équivalents (les mêmes opérations sont utilisées, éventuellement sur des registres différents) :

tableau 8

| | k | s |
|---|---|---|
| $\gamma 0$ : $R_1 <- R_1 + R_3$ ; $R_2 <- R_2 + R_4$ ; $R_5 <- R_2/R_1$ : <br> $R_1 <- R_1 + R_5$ ; $R_6 <- R_5{}^2$ ; | 0 | 1 |

(suite)

| | | k | s |
|---|---|---|---|
| | $R_6 <\text{-} R_6 + a$ ; $R_1 <\text{-} R_1 + R_6$ ; $R_2 <\text{-} R_1 + R4$ ;<br>$R_6 <\text{-} R_1 + R_3$ ; $R_5 <\text{-} R_5 \times R6$ ; $R_2 <\text{-} R_2 + R_5$ | | |
| $\gamma1 :$ | $R_6 <\text{-} R_1 + R_3$ ; $R_6 <\text{-} R_6 + R_3$ ; $R_5 <\text{-} R_2 / R_1$ ;<br>$R_5 <\text{-} R_1 + R_5$ ; $R_1 <\text{-} R_5{}^2$ ;<br>$R_1 <\text{-} R_1 + a$ ; $R_1 <\text{-} R_1 + R_5$ ; $R_2 <\text{-} R_1 + R_2$ ;<br>$R_6 <\text{-} R_1 + R_6$ ; $R_5 <\text{-} R_5 \times R_6$ ; $R_2 <\text{-} R_2 + R_5$ | 1 | 1 |

Du tableau 8, on déduit la matrice suivante :

$$\left(U(k, 1)\right)^{0 \leq k \leq 1}_{0 \leq 1 \leq 7} = \begin{pmatrix} 1 & 2 & 4 & 1 & 6 & 6 & 4 & 3 \\ 6 & 6 & 3 & 5 & 1 & 5 & 2 & 6 \end{pmatrix}$$

La matrice comprend seulement deux lignes puisque seuls deux blocs élémentaires différents sont utilisés. La matrice comprend 8 colonnes, chacune associée à un indice de registre variant d'une ligne à l'autre. La colonne 0 est ainsi associée à l'indice du registre (R1 ou R6) dans lequel on mémorise le résultat de la 1$^{\text{ èse}}$ opération (R1 + R3), la colonne 1 est associée à l'indice du registre (R2 ou R6) dans lequel on mémorise le résultat de la 2$^{\text{ème}}$ opération ($R_2$ + $R_4$ ou $R_6$ + $R_3$), les colonnes 1 et 2 sont associées aux registres dont on additionne le contenu au cours de la 2$^{\text{ème}}$ opération ($R_2$ + $R_4$ ou $R_6$ + $R_3$), etc.

La matrice est à utiliser avec le bloc élémentaire commun suivant :

```
γ(k) : R_U(k,0) <- R1 + R3 ; R_U(k,1) <- R_U(k,1) + R_U(k,2);
       R5 <- R2 / R1 ; R_U(k,3) <- R1 + R5 ;
       R_U(k,4) <- R5²;
       R_U(k,4) <- R_U(k,4) +a ; R1 <- R1 + R_U(k,5) ;
       R2 <- R1 + R_U(k,6) ; R6 <- R1 + R_U(k,7) ;
       R5 <- R5 . R6 ; R2 <- R2 + R5
```

pour réaliser un algorithme protégé utilisant le bloc commun $\Gamma(k)$ dans une boucle de type "répéter tant que" et réalisant une opération complexe utilisant des opérations de base (doublement de points et / ou addition de points)

Initialisation

$$R_1 <\text{-} X_1 ; R_2 <\text{-} Y_1 ;$$

$$R_3 <\text{-} X_1 ; R_4 <\text{-} Y_1 ;$$

$$i <\text{-} m\text{-}2 ; s <\text{-} 1 ; k <\text{-} 0;$$

Tant que $i \geq 0$, répéter $\Gamma(k, s)$ :

$$\gamma(k)$$

```
s     <- k - D_i + 1

k        <- (k+1) × (/s);

i <- i - s ;
```

Retourner (R1, R2)

Algorithme 8 (algorithme sur courbe elliptique protégé)

**Revendications**

1.  Procédé de calcul cryptographique mis en oeuvre dans un composant électronique, au cours duquel on exécute un nombre total ($L_T$) de fois un bloc d'instructions ($\Gamma(k,s)$) sur une donnée d'entrée (A), le nombre total ($L_T$) étant égal à une somme de nombres prédéfinis, chaque nombre prédéfini étant fonction de la valeur d'un bit (Di) d'indice d'entrée i d'une variable d'entrée secrète (D),
    le procédé comprenant l'initialisation de l'indice d'entrée (i), la répétition du bloc d'instructions ($\Gamma(k,s)$) tant que l'indice d'entrée (i) n'a pas atteint une valeur prédéfinie (0 ou M-1), et retourne le contenu du registre de calcul; le bloc d'instructions ($\Gamma(k,s)$) comprenant :

    une instruction de mise à jour d'un pointeur de boucle (k) en fonction de la valeur de la variable d'entrée secrète (D) le pointeur de boucle (k) indiquant un nombre d'exécutions déjà exécutées du bloc d'instructions ($\Gamma(k,s)$), au moins une instruction de calcul sur un registre dont un index est fonction du dit pointeur de boucle (k) et une instruction de mise à jour de l'indice d'entrée (i) par addition ou soustraction, à l'indice d'entrée (i), d'une fonction du pointeur de boucle (k).

2.  Procédé selon la revendication 1, dans lequel plusieurs nombres prédéfinis, chacun associé à un bit (Di) de la variable d'entrée secrète (D), ont une même valeur (Lj).

3.  Procédé selon l'une des revendications 1 à 2, dans lequel le bloc élémentaire d'instructions ($\Gamma(k,s)$) comprend également une instruction de mise à jour d'un pointeur d'état (s) indiquant si le nombre prédéfini ($L_j$) a été atteint.

4.  Procédé selon la revendication 3, dans lequel la valeur du pointeur d'état (s) est fonction de la valeur de la variable d'entrée secrète ($D_i$).

5.  Procédé selon l'une des revendications 1 à 4, dans lequel :

    - la mise à jour du pointeur de boucle comprend le calcul de la valeur du pointeur boucle en fonction de la valeur du pointeur d'état, de la valeur du pointeur de boucle et / ou de la valeur de la variable d'entrée secrète ($D_i$),
    - la mise à jour du pointeur d'état comprend le calcul de la valeur du pointeur d'état en fonction de la valeur du pointeur d'état, de la valeur du pointeur de boucle et / ou de la valeur de la variable d'entrée secrète ($D_i$).

6.  Procédé selon l'une des revendications 1 à 4, utilisé dans la mise en oeuvre d'un calcul d'exponentiation de type $B = A^D$, A étant la donnée d'entrée et D étant la variable d'entrée secrète de M bits, le procédé comprenant les étapes suivantes :

    Initialisation :

$$R_0 \;\text{<-}\; 1 \;;\; R_1 \;\text{<-}\; A \;;\; i \;\text{<-}\; M\text{-}1$$

Tant que i ≥ 0, répéter le bloc élémentaire d'instructions Γ(k, s) :

$$k \; \text{<--} \; (/s) \times (k+1) \; + \; s \times 2 \times (/D_i)$$

$$s \; \text{<--} \; (k \bmod 2) \; + \; (k \; \text{div} \; 2)$$

$$\gamma(k,s) \; : \quad R_0 \; \text{<--} \; R_0 \times R_{k \bmod 2}$$

$$i \; \text{<--} \; i - s$$

Retourner $R_0$.

**7.** Procédé selon l'une des revendications 1 à 5, utilisé dans la mise en oeuvre d'un calcul d'exponentiation de type $B = A^D$, A étant la donnée d'entrée et D étant la variable d'entrée secrète de M bits, le procédé comprenant les étapes suivantes :

Initialisation :

$$R_0 \; \text{<--} \; 1 \; ; \; R_1 \; \text{<--} \; A \; \; ; \; R_2 \; \text{<--} \; A^3 \; ;$$

$$D_{-1} \; \text{<--} \; 0 \; ; \; i \; \text{<--} \; M-1 \; ; \; s \; \text{<--} \; 1$$

Tant que i ≥ 0, répéter le bloc élémentaire d'instructions Γ(k, s) :

$$k \quad \text{<--} \; (/s) \times (k+1) \; + \; s \times (D_i + 2 \times (D_i \; \text{ET} \; D_{i-1}))$$

$$s \quad \text{<--} \; /((k \bmod 2) \oplus (k \; \text{div} \; 4))$$

$$\gamma(k,s) \; : \quad R_0 \quad \text{<--} \; R_0 \times R_{s \times (k \; \text{div} \; 2)}$$
$$i \quad \text{<--} \; i - s \times (k \bmod 2 + 1)$$

Retourner $R_0$.

**8.** Procédé selon l'une des revendications 1 à 5, utilisé dans la mise en oeuvre d'un calcul d'exponentiation de type $B = A^D$, A étant la donnée d'entrée et D étant la variable d'entrée secrète de M bits, le procédé comprenant les étapes suivantes :

Initialisation :

$$R_0 \; \text{<--} \; 1 \; ; \; R_1 \; \text{<--} \; A \; ; \; R_2 \; \text{<--} \; A^3 \; ;$$

$$D_{-1} \; \text{<--} \; 0 \; ; \; i \; \text{<--} \; M-1 \; ; \; s \; \text{<--} \; 1$$

Tant que i ≥ 0, répéter :

$$k \quad \texttt{<- (/s)×(k+1)}$$

$$s \quad \texttt{<- s} \oplus D_i \oplus \texttt{((}D_{i-1} \texttt{ ET (k mod 2))}$$

$$\Gamma\texttt{(k,s) : } R_0 \quad \texttt{<- } R_0 \texttt{×} R_{k \times s}$$
$$i \quad \texttt{<- i - k×s - (/}D_i\texttt{)}$$

Retourner $R_0$.

9. Procédé selon l'une des revendications 1 à 2, utilisé dans la mise en oeuvre d'un calcul d'exponentiation de type $B = A^D$, A étant la donnée d'entrée et D étant la variable d'entrée secrète de M bits, le procédé comprenant les étapes suivantes :

   Initialisation :

   $$R_0 \texttt{ <- 1 ; } R_1 \texttt{ <- A ; i <- M-1; k <- 1}$$

   Tant que i ≥ 0, répéter le bloc élémentaire d'instructions $\Gamma$(k, s) :

   $$k \texttt{ <- (}D_i\texttt{) ET (/k)}$$

   $$\gamma\texttt{' (s, k) : } \quad R_0 \texttt{ <- } R_0 \texttt{×} R_k$$

   $$i \texttt{ <- i - (/k)}$$

   Retourner $R_0$.

10. Procédé selon l'une des revendications 1 à 2, utilisé dans la mise en oeuvre d'un calcul d'exponentiation de type $B = A^D$, A étant la donnée d'entrée et D étant la variable d'entrée secrète de M bits, le procédé comprenant les étapes suivantes :

    Initialisation :

    $$R_0 \texttt{ <- 1 ; } R_1 \texttt{ <- A ; i <- 0 ; k <- 1}$$

    Tant que i ≤ M-1, répéter le bloc élémentaire d'instructions $\Gamma$(k, s) :

    $$k \texttt{ <- k} \oplus D_i$$

    $$\gamma\texttt{(k) : } \quad R_k \texttt{ <- } R_k \texttt{×} R_1$$
    $$i \texttt{ <- i+k}$$

    Retourner $R_0$.

11. Procédé selon l'une des revendications 1 à 4, dans lequel des liens entre la valeur du pointeur de boucle (k) et / ou la valeur du pointeur d'état (s) et / ou la valeur de la variable d'entrée secrète ($D_i$) sont définis par une table à plusieurs entrées.

**12.** Procédé selon la revendication 11, utilisé dans la mise en oeuvre d'un calcul d'exponentiation de type $B = A^D$, A étant la donnée d'entrée et D étant la variable d'entrée secrète de M bits, le procédé comprenant l'étape suivante :

Tant que $i \geq 0$, répéter le bloc élémentaire d'instructions $\Gamma(k, s)$ :

$$k \leftarrow (/s) \times (k+1) + s \times 2 \times (/D_i);$$

$$s \leftarrow U(k,1)$$

$$\gamma(k, s) : R_0 \leftarrow R_0 \times R_{U(k,0)}$$
$$i \leftarrow i - s$$

où $(U(k,1))$ est la matrice suivante :

$$\left(U(k, 1)\right)^{0 \leq k \leq 2}_{0 \leq 1 \leq 1} = \begin{pmatrix} 0 & 0 \\ 1 & 1 \\ 0 & 1 \end{pmatrix}$$

**13.** Procédé selon la revendication 11, utilisé dans la mise en oeuvre d'un calcul d'exponentiation de type $B = A^D$ selon l'algorithme $(M, M^3)$, A étant la donnée d'entrée et D étant la variable d'entrée secrète de M bits, le procédé comprenant l'étape suivante :

Tant que $i \geq 0$, répéter le bloc élémentaire d'instructions $\Gamma(k, s)$ : $(/D;$ ET $D_{i-1})$

$$k \leftarrow (/s) \times (k+1) + s \times (D_i + 2 \times (/D_i \text{ et } D_{i-1})$$

$$s \leftarrow U(k,2)$$

$$\gamma(k,s) : R_0 \leftarrow R_0 \times R_{U(k,0)} ;$$
$$i \leftarrow i - U(k,1)$$

où $(U(k,1))$ est la matrice suivante :

$$\left(U(k,\ 1)\right)_{\substack{0\leq k\leq 5\\0\leq 1\leq 2}} = \begin{pmatrix} 0 & 1 & 1 \\ 0 & 0 & 0 \\ 1 & 1 & 1 \\ 0 & 0 & 0 \\ 0 & 0 & 0 \\ 2 & 2 & 1 \end{pmatrix}$$

**14.** Procédé selon la revendication 11, utilisé dans la mise en oeuvre d'un calcul sur une courbe elliptique en coordonnées affines, calcul utilisant des opérations de type addition ou doublement de points, et dans lequel on réalise l'étape suivante :

Tant que $i \geq 0$, répéter le bloc élémentaire d'instructions $\Gamma(k, s)$ :

```
γ(k)  :  R_U(k,0)  <-  R_1 + R_3 ;
         R_U(k,1)  <-  R_U(k,1)  + R_U(k,2);
         R_5 <-  R_2 / R_1 ; R_U(k,3)  <-  R_1 + R_5 ;
         R_U(k,4)  <-  R_5 ^2 ;
         R_U(k,4)  <-  R_U(k,4)  +a ;
         R_1 <-  R_1 + R_U(k,5)  ;
         R_2  <-  R_1  +  R_U(k,6)  ;  R_6  <-  R_1  +
         R_U(k,7)  ;
         R_5 <-  R_5 . R_6 ; R_2 <-  R_2 + R_5


         s      <-  k - D_i + 1


         k      <-  (k+1) × (/s);


         i      <-  i - s ;
```

où $(U(k,1))$ est la matrice suivante :

$$\left(U(k,\ 1)\right)_{\substack{0\leq k\leq 1\\0\leq 1\leq 10}} = \begin{pmatrix} 1 & 2 & 4 & 1 & 6 & 6 & 4 & 3 \\ 6 & 6 & 3 & 5 & 1 & 5 & 2 & 6 \end{pmatrix}$$

**Claims**

**1.** A cryptographic calculation method implemented in an electronic component, during which a block of instructions ($r(k,s)$) is executed a total number ($L_T$) of times on an input data item (A), the total number ($L_T$) being equal to a sum of predefined numbers, each predefined number depending on the value of a bit (Di) with an input index i of a secret input variable (D),

the method comprising the initialisation of the input index (i), the repetition of the block of instructions ($\Gamma$(k,s)) as long as the input index (i) has not reached a predefined value (0 or M-1), and returning the content of the calculation register; the block of instructions ($\Gamma$(k,s)) comprising:

an instruction to update a loop pointer (k) according to the value of the secret input variable (D), the loop pointer (k) indicating a number of executions already executed of the block of instructions ($\Gamma$(k,s)),

at least one calculation instruction on a register, an index of which depends on the loop pointer (k),

and an instruction to update the input index (i) by the addition or subtraction, to or from the input index (i), of a function of the loop pointer (k).

2.  A method according to claim 1, in which several predefined numbers, each associated with a bit (Di) of the secret input variable (D), have the same value (Lj).

3.  A method according to one of claims 1 to 2, in which the elementary block of instructions ($\Gamma$(k,s)) also comprises an instruction to update a state pointer (s) indicating whether the predefined number (Lj) has been reached.

4.  A method according to claim 3, in which the value of the state pointer (s) depends on the value of the secret input variable (Di).

5.  A method according to one of claims 1 to 4, in which:

- the updating of the loop pointer comprises the calculation of the value of the loop pointer according to the value of the state pointer, the value of the loop pointer and/or the value of the secret input variable (Di),

- the updating of the state pointer comprises the calculation of the value of the state pointer according to the value of the state pointer, the value of the loop pointer and/or the value of the secret input variable (Di).

6.  A method according to one of claims 1 to 4, used in the implementation of an exponentiation calculation of the type $B = A^D$, A being the input data and D being the M-bit secret input variable, the method comprising the following steps:

Initialisation:

$$R_0 \; \texttt{<-} \; 1; \; R_1 \; \texttt{<-} \; A; \; i \; \texttt{<-} \; M\texttt{-}1$$

As long as $i \geq 0$, repeating the elementary block of instructions $\Gamma$(k,s):

$$k \; \texttt{<-} \; (/s) \; x \; (k\texttt{+}1) \; + \; s \; x \; 2 \; x \; (/D_i)$$

$$s \; \texttt{<-} \; (k \; \texttt{mod} \; 2) \; + \; (k \; \texttt{div} \; 2)$$

$$\gamma(k,s): \quad R_0 \; \texttt{<-} \; R_0 \; x \; R_{k \; \texttt{mod} \; 2}$$
$$i \; \texttt{<-} \; i \; \texttt{-} \; s$$

Returning $R_0$.

7.  A method according to one of claims 1 to 5, used in the implementation of an exponentiation calculation of the type $B = A^D$, A being the input data and D being the M-bit secret input variable, the method comprising the following steps:

Initialisation:

```
R₀ <- 1; R₁ <- A; R₂ <- A³;
D₋₁ <- 0; i <- M-1; s <- 1
```

As long as i ≥ 0, repeating the elementary block of instructions Γ(k,s) :

```
k   <- (/s) x (k+1) + s x (D₁ + 2 x (Dᵢ AND Dᵢ₋₁))
```

```
s   <- /((k mod 2)   (k div 4))
```

```
γ(k,s) :  R₀   <- R₀ x Rₛ ₓ ₍ₖ ₐᵢᵥ ₂₎
          i   <- i + s x (k mod 2 + 1)
```

Returning R₀.

**8.** A method according to one of claims 1 to 5, used in the implementation of an exponentiation calculation of the type B = A^D, A being the input data and D being the M-bit secret input variable, the method comprising the following steps:

Initialisation:

```
R₀ <- 1; R₁ <- A; R₂ <- A³;
```

```
D₋₁ <- 0; i <- M-1; s <- 1
```

As long as i ≥ 0, repeating:

```
k   <- (/s) x (k+1)
```

```
s   <- s   Dᵢ   (Dᵢ₋₁ AND (k mod 2))
```

```
Γ(k,s): R₀    <- R₀ x Rₖ ₓ ₛ
        i <- i - k x s - (/Dᵢ)
```

Returning R₀.

**9.** A method according to one of claims 1 to 2, used in the implementation of an exponentiation calculation of the type B = A^D, A being the input data and D being the M-bit secret input variable, the method comprising the following steps:

Initialisation:

```
R₀ <- 1; R₁ <- A; i <- M-1; k <- 1
```

As long as i ≥ 0, repeating the elementary block of instructions Γ(k, s):

```
k <- (Dᵢ) AND (/k)
```

```
γ(s, k): R₀ <- R₀ x Rₓ
         i <- i - (/k)
```

Returning $R_0$.

10. A method according to one of claims 1 to 2, used in the implementation of an exponentiation calculation of the type $B = A^D$, A being the input data and D being the M-bit secret input variable, the method comprising the following steps:

Initialisation:

```
R₀ <- 1; R₁ <- A; i <- 0; k <- 1
```

As long as i ≤ M-1, repeating the elementary block of instructions Γ(k, s):

```
k <- k      Dᵢ
```

```
γ(k):      Rₖ <- Rₖ x Rᵢ
```

```
i <- i+k
```

Returning $R_0$.

11. A method according to one of claims 1 to 4, in which the links between the value of the loop pointer (k) and/or the value of the state pointer (s) and/or the value of the secret input variable ($D_1$) are defined by a table with several inputs.

12. A method according to claim 11, used in the implementation of an exponentiation calculation of the type $B = A^D$, A being the input data and D being the M-bit secret input variable, the method comprising the following step:

As long as i ≥ 0, repeating the elementary block of instructions Γ(k, s):

```
k <- (/s) x (k + 1) + s x 2 x (/Dᵢ);
```

```
s <- U(k,1)
```

$$\gamma(k, s): \quad R_0 \; <- \; R_0 \; x \; R_{U(k,0)}$$

$$i \; <- \; i \; - \; s$$

where (U(k,1)) is the following matrix:

$$\left(U(k, 1)\right)_{0 \leq l \leq 1}^{0 \leq k \leq 2} = \begin{pmatrix} 0 & 0 \\ 1 & 1 \\ 0 & 1 \end{pmatrix}$$

**13.** A method according to claim 11, used in the implementation of an exponentiation calculation of the type $B = A^D$ according to the algorithm (M, M$^3$), A being the input data and D being the M-bit secret input variable, the method comprising the following step:

As long as $i \geq 0$ repeating the elementary block of instructions $\Gamma(k, s)$:

$$k \; <- \; (/s) \; x \; (k + 1) \; + \; s \; x \; (D_i + 2 \; x \; (/D_i \; AND \; D_{i-1})$$

$$s \; <- \; U(k,2)$$

$$\gamma(k, s): \quad R_0 \; <- \; R_0 \; x \; R_{U(k,0)}$$

$$i \; <- \; i \; - \; U(k,1)$$

where (U(k,1)) is the following matrix:

$$\left(U(k, 1)\right)_{0 \leq l \leq 2}^{0 \leq k \leq 5} = \begin{pmatrix} 0 & 1 & 1 \\ 0 & 0 & 0 \\ 1 & 1 & 1 \\ 0 & 0 & 0 \\ 0 & 0 & 0 \\ 2 & 2 & 1 \end{pmatrix}$$

**14.** A method according to claim 11, used in the implementation of a calculation on an elliptic curve in affine coordinates, a calculation using operations of the addition or doubling of points type and in which the following step is performed:

As long as $i \geq 0$, repeating the elementary block of instructions $\Gamma(k, s)$:

$$\gamma(k) \ : \ R_{U(k,0)} \ \texttt{<-} \ R_1 \ + \ R_3 \ ;$$
$$R_{U(k,1)} \ \texttt{<-} \ R_{U(k,1)} \ + \ R_{U(k,2)};$$
$$R_5 \ \texttt{<-} \ R_2 \ / \ R_1 \ ; \ R_{U(k,3)} \ \texttt{<-} \ R_1 \ + \ R_5 \ ;$$
$$R_{U(k,4)} \ \texttt{<-} \ R_5^{\ 2} \ ;$$
$$R_{U(k,4)} \ \texttt{<-} \ R_{U(k,4)} \ +a \ ;$$
$$R_1 \ \texttt{<-} \ R_1 \ + \ R_{U(k,5)} \ ;$$
$$R_2 \ \texttt{<-} \ R_1 \ + \ R_{U(k,6)} \ ; \ R_6 \ \texttt{<-} \ R_1 \ +$$
$$R_{U(k,7)} \ ;$$
$$R_5 \ \texttt{<-} \ R_5 \ . \ R6 \ ; \ R_2 \ \texttt{<-} \ R_2 \ + \ R_5$$

$$s \quad \texttt{<-} \ k \ - \ D_i \ + \ 1$$

$$k \quad \texttt{<-} \ (k+1) \ \times \ (/s);$$

$$i \quad \texttt{<-} \ i \ - \ s \ ;$$

where (U(k, 1)) is the following matrix:

$$\left(U(k,\ 1)\right)^{0 \le k \le 1}_{0 \le 1 \le 10} \ = \ \begin{pmatrix} 1 & 2 & 4 & 1 & 6 & 6 & 4 & 3 \\ 6 & 6 & 3 & 5 & 1 & 5 & 2 & 6 \end{pmatrix}$$

**Patentansprüche**

1. Verschlüsselungsverfahren, umgesetzt in einer elektronischen Komponente, bei dem man eine vordefinierte Anzahl ($L_j$) mal einen Anweisungsblock ($\Gamma$ (k, s)) an einer Eingangsvariablen (A)ausführt, wobei die Gesamtanzahl ($L_j$) einer Summe von vordefinierten Anzahlen entspricht, wobei jede vordefinierte Anzahl abhängig ist vom Wert eines Bits (Di) mit dem Eingangsindex i einer geheimen Eingangsvariablen (D), wobei das Verfahren die Initialisierung des Eingangsindex (i), die Wiederholung des Anweisungsblocks ($\Gamma$ (k, s)) bis der Eingangsindex (i) einen vordefinierten Wert (0 oder M-1) erreicht hat, und die Rückkehr des Inhalts des Rechenregisters umfasst, wobei der Anweisungsblock ($\Gamma$ (k, s)) die folgenden Anweisungen enthält:

   eine Aktualisierungsanweisung eines Schleifenanzeigers (k) entsprechend dem Wert der geheimen Eingangsvariablen (D), wobei der Schleifenanzeiger (k) eine Anzahl von bereits ausgeführten Ausführungen des Anweisungsblocks ($\Gamma$ (k, s)) anzeigt,
   mindestens eine Rechenanweisung an einem Register, dessen Index abhängig ist vom genannten Schleifenanzeiger (k), und
   eine Aktualisierungsanweisung des Eingangsindex (i) durch Addition oder Subtraktion zum bzw. vom Eingangsindex (i) einer Funktion des Schleifenanzeigers (k).

2. Verfahren gemäß Anspruch 1, bei dem mehrere vordefinierte Anzahlen, die jeweils einem Bit (Di) der geheimen Eingangsvariablen (D) zugeordnet sind, einen gleichen Wert (Lj) haben.

3. Verfahren gemäß einem der Ansprüche 1 bis 2, bei dem der elementare Anweisungsblock ($\Gamma$ (k, s)) ebenfalls eine Aktualisierungsanweisung eines Zustandsanzeigers (s) umfasst, der anzeigt, ob die vordefinierte Anzahl (Lj) erreicht ist.

**4.** Verfahren gemäß Anspruch 3, bei dem der Wert des Zustandsanzeigers (s) abhängig ist vom Wert der geheimen Eingangsvariablen ($D_i$).

**5.** Verfahren gemäß einem der Ansprüche 1 bis 4, bei dem:

- die Aktualisierung des Schleifenanzeigers die Berechnung des Werts des Schleifenanzeigers entsprechend dem Wert des Zustandsanzeigers, dem Wert des Schleifenanzeigers und / oder dem Wert der geheimen Eingangsvariablen ($D_i$) umfasst,
- die Aktualisierung des Zustandsanzeigers den Berechnung des Werts des Zustandsanzeigers entsprechend dem Wert des Zustandsanzeigers, dem Wert des Schleifenanzeigers und / oder dem Wert der geheimen Eingangsvariablen ($D_i$) umfasst.

**6.** Verfahren gemäß einem der Ansprüche 1 bis 4, das für die Umsetzung einer Exponentialrechnung vom Typ B = $A^D$ verwendet wird, wobei A die Eingangsgröße und D die geheime Eingangsvariable von M Bits ist, wobei das Verfahren die folgenden Schritte umfasst:

Initialisierung:

$$R_0 < - 1 ; R_1 < - A; i < - M-1$$

So lange i ≥ 0, den elementaren Anweisungsblock $\Gamma(k, s)$ wiederholen:

$$k < - (/s) \ x \ (k+1) + sx2x(/D_i)$$

$$s < - (k \bmod 2) + (k \operatorname{div} 2)$$

$$\gamma(k,s): \quad R_0 < - R_0 x R_{k \bmod 2}$$
$$I < - I - s$$

Zurück $R_0$.

**7.** Verfahren gemäß einem der Ansprüche 1 bis 5, das für die Umsetzung einer Exponentialrechnung vom Typ B = $A^D$ verwendet wird, wobei A die Eingangsgröße und D eine geheime Eingangsvariable von M Bits ist, wobei das Verfahren die folgenden Schritte umfasst:

Initialisierung:

$$R_0 < - 1 ; R_1 < - A ; R_2 < - A^3 ;$$

$$D_{-1} < - 0 ; i < - M-1 ; s <- 1$$

So lange i ≥ 0, den elementaren Anweisungsblock $\Gamma(k, s)$ wiederholen:

$$k < - (/s)x(k+1) + sx (D_i + 2x(D_i \text{ UND } D_{i-1}))$$

$$s < - /((k \bmod 2) (+) (k \text{ div } 4))$$

$$\gamma(k,s): \quad R_0 < - R_0 x R_{sx(k \text{ div } 2)}$$
$$i < - I - sx(k \bmod 2 + 1)$$

Zurück $R_0$.

8. Verfahren gemäß einem der Ansprüche 1 bis 5, das für die Umsetzung einer Exponentialrechnung vom Typ B = $A^D$ verwendet wird, wobei A die Eingangsgröße und D eine geheime Eingangsvariable von M Bits ist, wobei das Verfahren die folgenden Schritte umfasst:

Initialisierung:

$$R_0 < - 1 \ ; \ R_1 < - A \ ; \ R_2 < - A^3 \ ;$$

$$D_{-1} < - 0 \ ; \ i < - M-1 \ ; \ s <- 1$$

So lange i ≥ 0, wiederholen:

$$k < - (/s)x(k+1)$$

$$s < - s (+) D_i (+) ((D_{i-1} \text{ UND } (k \bmod 2))$$

$$\gamma(k,s) : \quad R_0 < - R_0 x R_{kxs}$$
$$i < - i \ kxs - (/D_i)$$

Zurück $R_0$.

9. Verfahren gemäß einem der Ansprüche 1 bis 2, das für die Umsetzung einer Exponentialrechnung vom Typ B = $A^D$ verwendet wird, wobei A die Eingangsgröße und D die geheime Eingangsvariable von M Bits, ist, wobei das Verfahren die folgenden Schritte umfasst:

Initialisierung:

$$R_0 < - 1 \ ; \ R_1 < - A \ ; \ i < - M-1 \ ; \ k < - 1$$

So lange i ≥ 0, den elementaren Anweisungsblock Γ'(k, s) wiederholen:

$$k \; < \; - \; (D_i) \; \text{UND} \; (/k)$$

$$\gamma(s,k): \quad R_0 \; < \; - \; R_0 x R_k$$

$$i \; < \; - \; i \; - \; (/k)$$

$R_0$ umdrehen.

10. Verfahren gemäß einem der Ansprüche 1 bis 2, das für die Umsetzung einer Exponentialrechnung vom Typ B = $A^D$ verwendet wird, wobei A die Eingangsgröße und D die geheime Eingangsvariable von M Bits, ist, wobei das Verfahren die folgenden Schritte umfasst:

Initialisierung:

$$R_0 \; < \; - \; 1 \; ; \; R_1 \; < \; - \; A \; ; \; i \; < \; - \; 0; \; k \; < \; - \; 1$$

So lange $i \leq M-1$, den elementaren Anweisungsblock $\Gamma(k,s)$ wiederholen:

$$k \; < \; - \; k \; (+) \; D_i$$

$$\gamma(k): \quad R_k \; < \; - \; R_k x R_1$$

$$i \; < \; - \; i+k$$

Zurück $R_0$.

11. Verfahren gemäß einem der Ansprüche 1 bis 4, bei dem die Verbindungen zwischen dem Wert des Schleifenanzeigers (k) und / oder dem Wert des Zustandsanzeigers (s) und / oder dem Wert der geheimen Eingangsvariablen ($D_i$) durch eine Tabelle mit mehreren Eingängen definiert werden.

12. Verfahren gemäß Anspruch 11, das für die Umsetzung einer Exponentialrechnung vom Typ B = $A^D$ verwendet wird, wobei A die Einganggröße und D die geheime Eingangsvariable von M Bits, ist, wobei das Verfahren den folgenden Schritt umfasst:

So lange $i \geq 0$, den elementaren Anweisungsblock $\Gamma(k, s)$ wiederholen:

$$k \; < \; - \; (/s) x(k+1) \; + \; sx2x(/D_i)$$

$$s \; < \; - \; U(k, \; 1)$$

$$\gamma(k,s): \quad R_0 \; < \; - \; R_0 x R_{U(k,0)}$$

$$i \; < \; - \; i \; - \; s$$

wobei (U(k, l) die folgende Matrix ist:

$$\left(U(k, 1)\right)^{0\leq k\leq 2}_{0\leq l\leq 1} = \begin{pmatrix} 0 & 0 \\ 1 & 1 \\ 0 & 1 \end{pmatrix}$$

**13.** Verfahren gemäß Anspruch 11, das für die Umsetzung einer Exponentialrechnung vom Typ $B = A^D$ gemäß dem Algorithmus $(M, M^3)$ verwendet wird, wobei A die Eingangsgröße und D die geheime Eingangsvariable von M Bits, ist, wobei das Verfahren den folgenden Schritt umfasst:

So lange i ≥ 0, den elementaren Anweisungsblock $\Gamma(k, s)$ wiederholen:

```
k < - (/s)x(k+1) + sx(Dᵢ + 2x(/D ; UND Dᵢ₋₁))
```

```
s < - U(k, 2)
```

```
γ(k,s):  R₀ < - R₀xR_U(k,0);
         i < - i - U(k,1)
```

wobei (U(k, 1) die folgende Matrix ist:

$$\left(U(k, 1)\right)^{0\leq k\leq 5}_{0\leq l\leq 2} = \begin{pmatrix} 0 & 1 & 1 \\ 0 & 0 & 0 \\ 1 & 1 & 1 \\ 0 & 0 & 0 \\ 0 & 0 & 0 \\ 2 & 2 & 1 \end{pmatrix}$$

**14.** Verfahren gemäß Anspruch 11, das für die Umsetzung einer Rechnung an einer elliptischen Kurve mit verfeinerten Koordinaten verwendet wird, Rechnung, die Operationen vom Typ Addition oder Punkteverdoppelung verwendet, und bei der man den folgenden Schritt durchführt:

So lange i ≥ 0, den elementaren Anweisungsblock $\Gamma(k, s)$ wiederholen:

$\gamma(k)$ : $R_{U(k,0)}$ <- $R_1$ + $R_3$ ;

$R_{U(k,1)}$ <- $R_{U(k,1)}$ + $R_{U(k,2)}$;

$R_5$ <- $R_2$ / $R_1$ ; $R_{U(k,3)}$ <- $R_1$ + $R_5$ ;

$R_{U(k,4)}$ <- $R_5^2$ ;

$R_{U(k,4)}$ <- $R_{U(k,4)}$ +a ;

$R_1$ <- $R_1$ + $R_{U(k,5)}$ ;

$R_2$ <- $R_1$ + $R_{U(k,6)}$ ; $R_6$ <- $R_1$ +

$R_{U(k,7)}$ ;

$R_5$ <- $R_5$ . $R_6$ ; $R_2$ <- $R_2$ + $R_5$

s    <- k - $D_i$ + 1

k    <- (k+1) × (/s);

i    <- i - s ;

wobei (U(k, 1) die folgende Matrix ist:

$$\left(U(k,\ 1)\right)^{0 \le k \le 1}_{0 \le 1 \le 10} = \begin{pmatrix} 1 & 2 & 4 & 1 & 6 & 6 & 4 & 3 \\ 6 & 6 & 3 & 5 & 1 & 5 & 2 & 6 \end{pmatrix}$$

Begin

Decision

Process $\Pi_0$

Process $\Pi_{0\ fictif}$

Process $\Pi_{1fictif}$

Process $\Pi_1$

fin du calcul ?

Non

Oui

End

Fig. 1

Begin

bloc élémentaire commun $\Gamma$

fin du calcul ?

Non

Oui

End

Fig. 2

Begin

$$k \;\leftarrow\; (/s).(k+1) + s.f(Di)$$
$$s \;\leftarrow\; (k \bmod 2) + (k \operatorname{div} 2)$$
$$R_0 \;\leftarrow\; R_0.R_{(k \bmod 2)}$$
$$i \;\leftarrow\; i - s$$

End

Fig. 3

Begin

$$k \;\leftarrow\; (Di) \text{ ET } (/k)$$
$$R_0 \;\leftarrow\; R_0.R_k$$
$$i \;\leftarrow\; i - (/k)$$

End

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Randomized addition-subtraction chains as a countermeasure against power attacks. **E. OSWALD et al.** Cryptographic Hardware and Embedded Systems - CHES 2001. Springer-Verlag, 2001, vol. 2162, 39-50

- Preventing SPA/DPA in ECC systems using the Jacobi form. **P.Y. LIARDET et al.** Cryptographic Hardware and Embedded Systems - CHES 2001. Springer-Verlag, 2001, vol. 2162, 391-401